# EUROPEAN PATENT SPECIFICATION

(11) **EP 1 641 339 B1**
(45) Date of publication and mention of the grant of the patent: **20.12.2006**
(21) Application number: 04748694.9
(22) Date of filing: 30.06.2004
(51) Int. Cl.: A01K 61/00

(54) **METHOD AND INSTALLATION FOR HARVESTING SHELLFISH CAUGHT ON A SHEET-LIKE SUBSTRATE**
VERFAHREN UND ANLAGE ZUM ERNTEN VON AUF EINEM BLATTARTIGEN SUBSTRAT GEFANGENEN SCHALENTIEREN
PROCEDE ET INSTALLATION POUR RECUEILLIR DES CRUSTACES PRIS DANS UN SUBSTRAT A MAILLES

(30) Priority: 04.07.2003 NL 1023830
(43) Date of publication of application: 05.04.2006
(73) Proprietor: West 6 B.V., 1785 AD Den Helder (NL)
(72) Inventor: GROOT, Cornelis, 1783 AD den Helder (NL)
(74) Representative: van Westenbrugge, Andries
(86) International application number: PCT/NL2004/000464
(87) International publication number: WO 2005/002330

(56) References cited:
- WO-A-01/93671

## Description

The present invention relates to a method for harvesting shellfish that have been caught on a sheet-like substrate, such as a net, wherein the substrate has a longitudinal direction and a transverse direction transverse thereto; wherein the substrate is fed in the longitudinal direction thereof between two harvesting members arranged parallel to one another and moving relative to the substrate, which harvesting members free the shellfish from the substrate on either side of the substrate; wherein the shellfish that have been freed are collected.

A method of this type and a installation for carrying out this method is disclosed in WO 01/93671. According to WO 01/93671 the shellfish are harvested while the net on which they have been caught is suspended in the water. The harvesting installation used for this purpose consists of 2 frame sections hinged to one another, which frame sections can be placed in the opened out position on either side of the net with the hinge axis located along the top edge of the net and can then be folded towards one another so that the two frame sections are in contact with the net on either side. For harvesting, the net is fed in the longitudinal direction between these frame sections by moving the frame sections along the net. Viewed in the direction of movement, the frame sections are each provided at the front with a harvesting member in the form of, per frame section, a roller with loosening members that extends over the entire vertical transverse direction of the net. Here the loosening members are profiled ribs. Each roller has 2 profiled ribs, which, with a common starting point in the middle of each roller, extend in spiral form in opposing directions. With this arrangement the direction of rotation of the harvesting members in the form of rollers is always chosen such that, on the one hand, the rollers exert a force on the net/shellfish that is oriented in the opposite direction to the feed direction of the net and, on the other hand, that, as a consequence of the opposing spiral form, the ribs in the lower half of each roller exert a downward force on the shellfish/the net and in the upper half of the roller exert an upward force on the net/the shellfish. Thus, at the location of the harvesting members and while the harvesting members are in operation, there are forces acting on the net that tend to want to keep the net flat. However, these forces that tend to hold the net flat have little effect. After all, the harvesting member in the form of a roller on the one frame section - on the one side of the net - is arranged offset, in the longitudinal direction of the net, with respect to the harvesting member in the form of a roller on the other frame section - on the other side of the net - so that the net is not gripped by the harvesting members. The consequence of this is that the net can become wrinkled when it is fed between the harvesting members, for example as a result of the action of flow phenomena, such as waves, that exist in the water. As a consequence of this the harvesting effect is not optimum. Furthermore, as a consequence of this the net can jam between the harvesting members here. In the case of the installation according to WO/01/93671, the transport force for feeding the net between the harvesting members is supplied by means of 2 transport rollers - one on each side of the net - that are provided at the rear of the frame sections. The harvested part of the net is fed between these transport rollers, which harvested part is clamped between the transport rollers and as a consequence of the driven rotation thereof is pulled backwards between these transport rollers. Problems can also arise with these transport rollers if the net becomes wrinkled. It will be clear that if a wrinkle is produced at the harvesting members and this wrinkle is still present at the transport rollers that the transport rollers will then perpetuate the wrinkle because the net is clamped between the transport rollers. At that point in time the wrinkle could then remain in the net or, even worse, become larger. It is also pointed out that neither the transport rollers nor the harvesting rollers - even if they are positioned directly opposite one another just like the transport rollers - counteract the formation of wrinkles or remove wrinkles that have been produced. Thus, wrinkles produced in the net by, for example, waves, will continue to lead to problems.

The aim of the present invention is to provide an improved method for harvesting shellfish that have been caught on a sheet-like substrate, such as a net, which improved method in particular prevents the abovementioned problems.

Said aim is provided according to the invention by the providing a method for harvesting shellfish that have been caught on a sheet-like substrate, such as a net, wherein the substrate has a longitudinal direction and a transverse direction transverse thereto; wherein the substrate is fed in the longitudinal direction thereof between two harvesting members arranged parallel to one another and moving with respect to the substrate, which harvesting members free the shellfish from the substrate on either side of the substrate; wherein the shellfish that have been freed are collected; which method according to the invention is characterised in that the substrate is tensioned in the transverse direction at the harvesting members, independently of the operation of the harvesting members.

Tensioning the substrate in the transverse direction thereof independently of the operation of the harvesting member, prevents the possibility of the net being fed between the harvesting members folded double or wrinkled or irregularly in some other way; furthermore any wrinkles present are removed; what is also achieved is that there is more freedom in the design of the harvesting members because the harvesting members themselves do not have to have a smoothing action on the substrate - although they can indeed have such an action according to the invention and within the scope of the claims.

So that the substrate can be tensioned not only in the vertical direction but also in the horizontal direction when it is fed between the harvesting members - which is advantageous in view of the inefficient harvesting members - it is advantageous according to the invention if, viewed in the longitudinal direction, transport means are provided after the harvesting members, by means of which transport means they exert a tensile force acting in the feed direction on the substrate.

In order to counteract damage to the substrate when it is tensioned, it is advantageous according to the invention if the substrate is provided at the bottom edge and top edge running in the longitudinal direction with a bottom cable and top cable, respectively, and if the tensioning of the substrate in the transverse direction is effected by exerting a transverse tensioning force in the transverse direction on the bottom cable and or top cable. The force for tensioning in the transverse direction is then not exerted directly on the substrate but is exerted indirectly via a bottom cable and or top cable. A further advantage is that gripping to exert the transverse force takes place at the edges and thus has no, or at least little, influence on the shellfish to be harvested, which essentially are on the surface of the substrate.

To further relieve the stress on the substrate and shellfish caught on the substrate it is furthermore advantageous according to the invention if, viewed in the longitudinal direction, a tensile force acting in said feed direction is exerted after the harvesting members on both the bottom cable and the top cable.

So that the substrate is not pulled skew it is advantageous with this procedure if said tensile forces are exerted on the bottom cable and top cable such that, viewed in the longitudinal direction, the bottom cable and top cable are advanced/pulled forwards at approximately the same speed.

Although the method according to the invention can also be employed under water as, for example, an improvement on what is disclosed in WO 01/93671, according to the invention it is preferable if the substrate is brought above the water, preferably completely above the water, from a vertical position suspended in the water, by means of a raising track running upwards from the water level, by pulling up the substrate on the raising track in said longitudinal direction while the substrate is suspended from said raising track and then feeding the substrate through said harvesting members by means of a feed track adjoining the raising track, whilst the substrate is suspended from said feed track so as to harvest above water. The advantage of harvesting the shellfish above water is that the influence of, for example, waves on the substrate during harvesting of the shellfish can be even further reduced. A further advantage is that there is better control over the harvesting process, the mussels can be collected more easily and then transferred, for example to a vessel.

In this context it is furthermore advantageous if after the shellfish have been harvested therefrom the substrate is returned to the water by means of a lowering track running downwards, whilst the substrate is suspended from said lowering track. Interim storage of the substrate is thus avoided. Furthermore, the substrate can be immediately suspended in the water again to gather in a new harvest of shellfish. The substrate, which usually is provided with floats along the top edge, can then, for example, be suspended behind a ship and returned from a harbour or other harvesting location to the catch location.

However, it is preferable according to the invention if harvesting takes place on a vessel, or at least a floating body, the substrate being pulled up out of the water against the direction of flow of the water. By carrying out harvesting on a floating body it is possible to remove the shellfish from the net at the location where they have been caught. By pulling up the substrate from the water against the direction of flow of the water, the substrate is, as it were, hauled in stretched out lengthwise. With this procedure it is furthermore advantageous if after harvesting the substrate is returned to the water with the direction of flow of the water. This prevents the possibility of the part of the substrate that still has to be harvested becoming entangled with the part of the substrate that has been harvested. After all, as a consequence of the flow, the two remain parallel alongside one another.

According to a further aspect, the present invention relates to a installation according to claim 10 for harvesting shellfish that have been caught on a sheet-like substrate, such as a net, wherein the substrate has a longitudinal direction, a transverse direction transverse thereto, a bottom longitudinal edge and a top longitudinal edge; wherein the installation comprises, inter alia.
- harvesting members extending in the transverse direction of the substrate, equipped to be able to feed the substrate, in the longitudinal direction thereof, between the harvesting members and in so doing to free the shellfish from the substrate;
- an upper substrate guide, provided at the top of the harvesting members and extending in the longitudinal direction of the substrate, from which the substrate, or at least the portion of the substrate to be treated by the harvesting members, can be suspended.

The advantages associated with such a harvesting installation will be clear from the above description.

Likewise for reasons already explained above, in the case of the installation according to the invention it is advantageous if, viewed in the feed direction, transport means equipped to exert a tensile force on the substrate to be fed between the harvesting members are provided after the harvesting members.

So that damage to the substrate is counteracted and tensioning of the substrate in the transverse direction is facilitated, it is advantageous according to the invention if the transport means comprise upper transport means provided in the upper substrate guide, which upper transport means are equipped to engage on the substrate at the upper longitudinal edge. According to the invention, these upper transport means can advantageously comprise an endless conveyor. This endless conveyor will then engage on the top longitudinal edge over a certain distance and thus distribute the forces to be exerted on the substrate during this operation over some distance of the substrate. According to the invention, the upper conveyor advantageously comprises parallel endless chains provided some distance apart, which endless chains are provided with teeth. The lines to which floats are attached can then run between said endless chains, so that these floats can be carried along over the top of the endless conveyor. The teeth on the endless chains can then either engage directly on the top edge of the substrate, for example from either side, or, in another embodiment, on the floats. In this latter case, the risk of damage to the substrate itself is reduced to a minimum. With regard to the latter case where the teeth engage on the floats, it is advantageous according to the invention if the installation furthermore comprises the substrate to be harvested and if the substrate is provided with floats along the top longitudinal edge, with engagement surfaces of a flexible, rubbery material provided at the bottom of the floats, and if the teeth on the endless chains are provided in such a way that they extend upwards from the top pack of the endless chains so as to be able to engage with the engagement surfaces of the floats resting on the endless chains. By providing the floats with rubbery engagement surfaces, good grip of the teeth on the floats is ensured and the risk of damage to the floats themselves or of the floats possibly springing a leak is prevented. The engagement of the teeth with the floats themselves or with the engagement surfaces thereof is also very reliably ensured, at least when feeding the substrate between the harvesting members and before this, as a consequence of the substantial weight of harvested shellfish. In the case of mussels, the harvest at a substrate height of approximately 3 metres per horizontal straight length of the substrate will quite easily be 10s of kilograms, even more than 150 kilograms and sometimes 300 kilograms or more.

It is furthermore advantageous according to the invention if the floats are attached to the top longitudinal edge of the substrate by means of elongated coupling members, termed lines, and if the distance between endless chains is such that elongated coupling members can extend between these with clearance.

For the reasons explained with regard to the method according to the invention, it is advantageous in the case of the installation according to the invention if the transport means comprise bottom drive means that are provided in the bottom substrate guide and are equipped to engage on the bottom longitudinal edge of the substrate.

In this context it is particularly advantageous according to the invention if the bottom drive means comprise a multiplicity of drive wheels that are equipped to engage, with the running surfaces thereof facing one another, on either side of the bottom longitudinal edge of the substrate. With this arrangement it is not necessary that all drive wheels are driven. For example, it is conceivable that the drive wheels on one side of the substrate are driven whilst wheels on the other side are not driven and constitute co-rotating counter wheels. In order with this arrangement to increase the efficacy of the transfer of the driving force to the substrate, without increasing the clamping force acting directly on the substrate to too great an extent, it is furthermore advantageous according to the invention if the drive wheels comprise a row of first drive wheels, the axes of which are parallel to one another and in line, and a second row of drive wheels, the axes of which are in line with one another, wherein the row of first drive wheels and row of second drive wheels run parallel to one another, if the first drive wheels and second drive wheels are provided offset with respect to one another such that the first and second drive wheels can be located with the portions of the peripheral surfaces facing one another interspersed. What is achieved in this way is that when the substrate is fed between the drive wheels it follows a meandering, more or less wavy path, which increases the engagement surface of the drive wheels on the substrate and thus counteracts slip and keeps the force to be transferred per unit surface area to the substrate low.

So that the drive installation can easily be removed from the substrate, can be adapted to various substrate thicknesses or can be adjusted to the substrate, it is advantageous according to the invention if the distance between the row of first drive wheels and the row of second drive wheels is adjustable.

According to a further advantageous embodiment of the invention, the tensioning means comprise two rotary tensioning wheels that are arranged alongside one another with their circular surfaces facing one another and are equipped to engage, when located on either side of the substrate to be fed between them, with the peripheral surfaces on the top of the bottom longitudinal edge of said substrate in order to exert a downward force on said bottom longitudinal edge. These tensioning wheels can optionally be driven and in particular could also be free-running tensioning wheels. The sole function of these wheels is to hold the bottom edge of the substrate pressed downwards, i.e. to keep it a sufficiently great distance away from the top edge of the substrate. According to the invention, viewed in the feed direction of the substrate, the tensioning wheels are advantageously provided after the harvesting members. The reason for this is that they then engage on a portion of the substrate from which all shellfish or at least the majority of shellfish have already been removed, so that disruption of the operation of the tensioning wheels as a consequence of, for example, the shellfish is counteracted. Preferably, the tensioning wheels are arranged at an angle with respect to one another, so that there is room for the substrate to pass through.

For the reasons already explained when discussing the method according to the invention, it is advantageous according to the invention if the installation has a substrate with a bottom longitudinal edge comprising a cable.

Once again for the reasons explained with regard to the method according to the invention, it is advantageous according to the invention if the installation according to the invention furthermore comprises:
- a vessel, the harvesting members being provided on deck, and
- a raising track that runs upwards from the water level and on deck adjoins one end of the top substrate guide to guide substrate suspended from the raising track into the top substrate guide.

Likewise for reasons already explained, with this arrangement it is furthermore advantageous according to the invention if the installation has a lowering track that adjoins the other end of the top substrate guide and runs down to the water in order to return the substrate from which the shellfish have been removed to the water. Once again for reasons that have already been explained, with this arrangement it is advantageous if the lowering track and raising track, or at least the free ends thereof, run in the same horizontal direction, viewed in the horizontal plane.

The present invention will be explained in more detail below with reference to an illustrative embodiment of an installation according to the invention, for application of the method according to the invention, shown diagrammatically in the drawings. In the drawings:
Figure 1 shows a diagrammatic and perspective view of an installation according to the invention;
Figure 2 shows diagrammatically and in side view as a detail, the II section in Figure 1 of the raising track of the installation in Figure 1:
Figure 3 shows diagrammatically and in a side view (Fig 3a) and rear view (Fig. 3b), as a detail, the section III in Figure 2;
Figure 4 shows a diagrammatic and perspective view of the tensioning and transport means engaging on the bottom of the substrate.

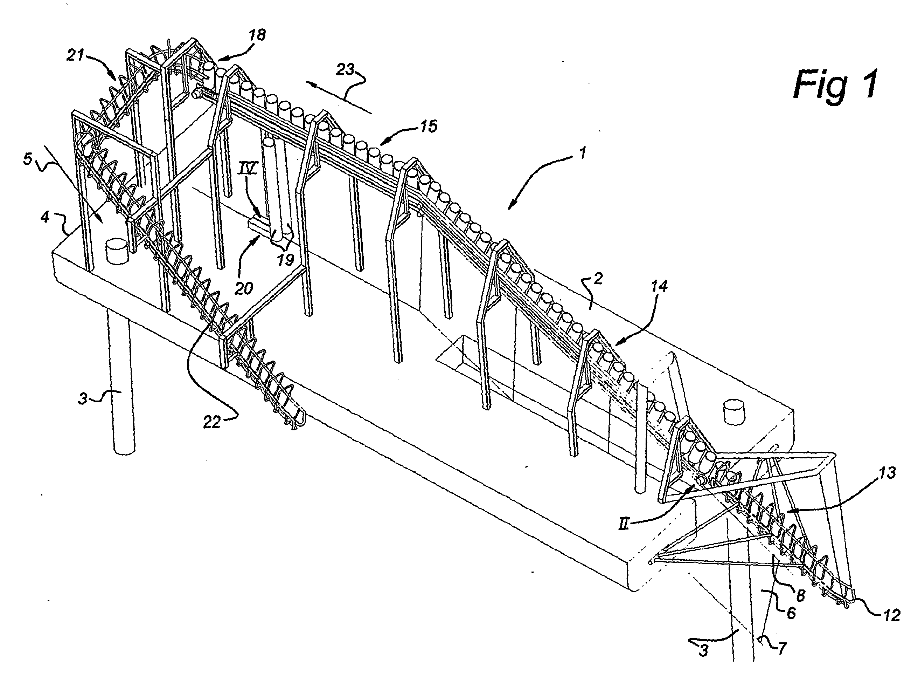

Figure 1 shows, highly diagrammatically, an installation 1 for harvesting shellfish that have been caught, in particular mussels. The installation 1 has a vessel in the form of a pontoon 2, that is itself able to float. One, two or more vertical columns 3 can advantageously be provided to anchor the vessel. These columns 3 are driven into the bed of the body of water and the pontoon 2 will advantageously be able to move up and down along the columns 3 in connection with the ebb and flow action. Such a pontoon 2 can easily be positioned with its front end 4 facing into the current indicated by arrow 5, by lifting the columns located at the rear from the bed of the body of water. The pontoon 2 will then, especially if the column provided at the front end 4 is provided centrally - in contrast to what is shown - automatically be oriented by the current facing the direction of flow 5. This is useful in particular because the direction of flow reverses on ebb and flow and because, in connection with hauling in the substrate and returning substrate to the water, it is advantageous to haul in the substrate against the direction of flow 5 and to lower it into the water again with the direction of flow 5. The reason for this is that the substrates, which usually are 10s of metres to even more than 100 metres long, then also remain oriented with the current in the water.

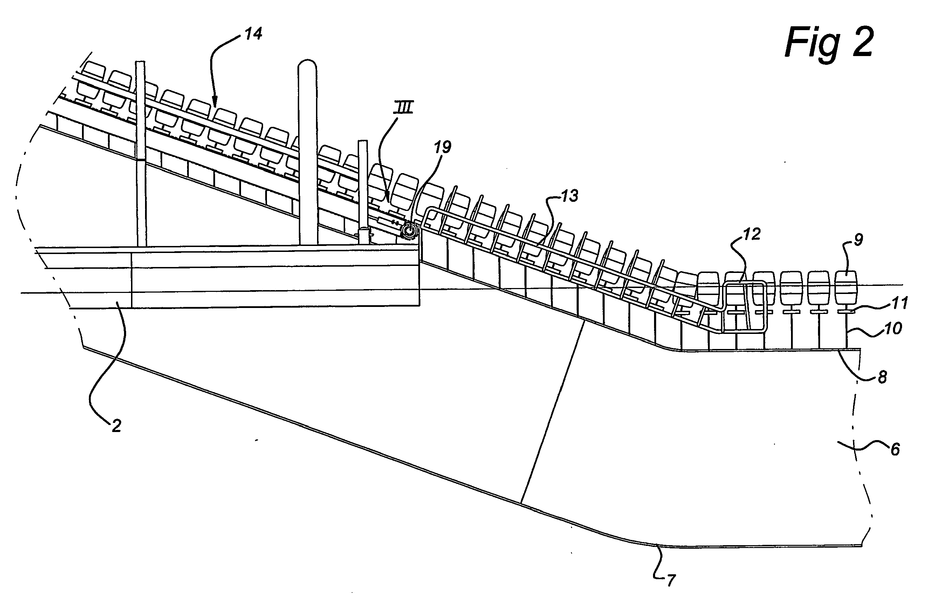

With reference to, in particular, Figure 2, the substrate consists of an elongated net 6 which has, for example, a height of approximately 3.5 metres in the vertical direction and a length of, for example, approximately 110 metres in the longitudinal direction. The net 6 is provided along the entire top edge with a cable 8, from which the net 6 is suspended. Floats in the shape of barrels 9 that are attached to the top cable 8 by means of ropes and/or chains 10, hereinafter referred to as lines 10, are provided along the entire cable 8. As can be seen in Fig. 2, the floats 9 are provided so to say shoulder to shoulder. A disc 11 of rubbery material is provided below each float 9, which disc 11 has a central opening through which line 10 has been pushed. Along the bottom edge the net 6 is provided with a bottom cable 7. During the catch bottom cable 7 is used to anchor the net to the bed of the body of water by means of anchor lines attached to the ends of the bottom cable 7. When it is now desired to haul in the net 6 to harvest the mussels clinging thereto, the anchor lines will, of course, be uncoupled. The actual hauling in will be effected by means of a winch that is attached to one end of the top cable 8. The net will then be hauled in by means of the winch with winch cable such that the floats 9 are guided into the intake guide 12. The intake guide 12 has at the bottom thereof an uninterrupted slot running in the longitudinal direction thereof, through which the lines 10 can extend. On either side of this slot, guide rails are provided on which the bottom of the float 9 or, if provided, the discs 11 come to bear.

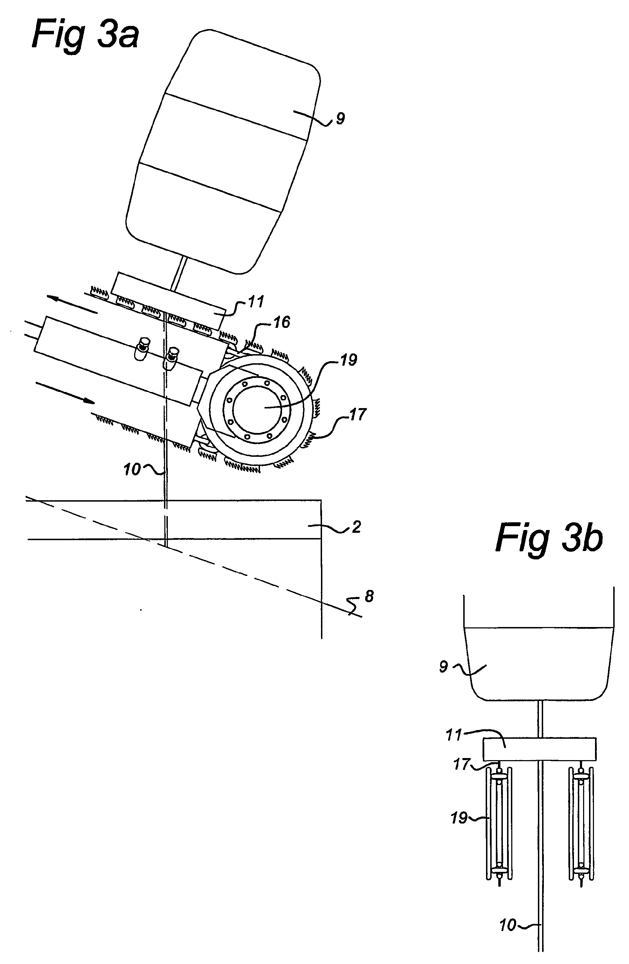

The upward sloping section 13 of the intake guide adjoins the driven, sloping section 14 of the raising track. The sloping, driven section 14 of the raising track merges into an essentially horizontal, driven feed track 15. In the driven section 14 of the raising track and the driven feed track 15 use is made of - see in particular Figures 3a and 3b - two endless chains 16 arranged in parallel with toothcombs 17 on the sides thereof that are oriented outwards. Just as in the case of the input guide 12, 13, the float line 10 runs between the two parallel endless chains 16 - see Figure 3b - and the float 9 or, in the example shown, the disc 11- that is fixed to the line 10 - bears on the top parts of the endless chains 16. Partly under the influence of the substantial weight of the net 6, there is intensive engagement between the toothcombs 17 and the discs 11 of each float 9. To improve the engagement, the discs 11 are, in particular, made of a rubbery material. This also prevents the floats 9, constructed as barrels, developing a leak.

As soon as a sufficient length of the net is hanging at the bottom of the driven section 14 of the raising track, the winch cable can be uncoupled and the net 6 can be hauled in further by means of the endless chains 16. The net is further fed along the driven section 14 of the raising track to the feed track 15, where the endless chains 16 still continue to the upper turning point 18 (see arrow Fig. 1), so as then to be returned underneath the bottom part to the lower turning point 19 shown in Fig. 3.

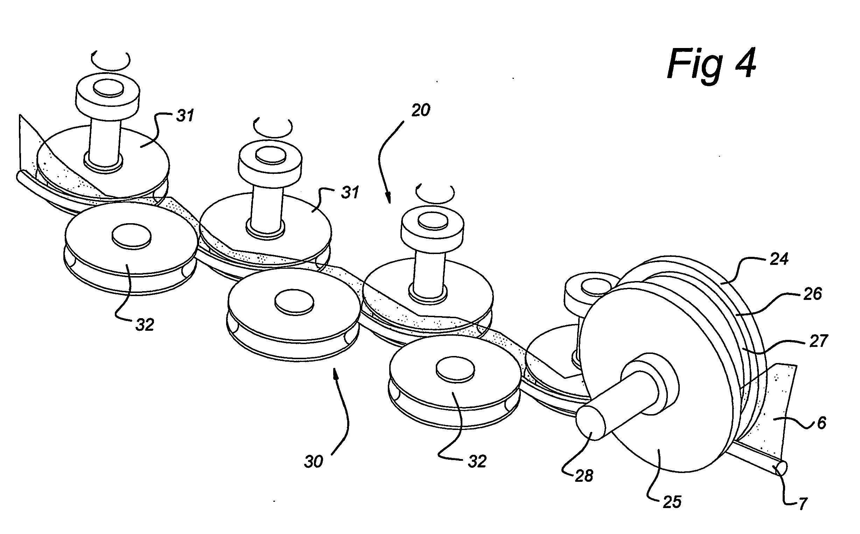

Harvesting members 19 are provided below the feed track 15. Tensioning means and transport means 20, illustrated in more detail in Fig. 4, are provided after the harvesting members 19 at the bottom of the harvesting members 19.

A lowering track 21, 22, which essentially is constructed in the same way as the non-driven section 13 of the raising track, adjoins the feed track 15. The first section 21 of the lowering track is essentially a U-bend section and the second section of the lowering track is a section 22 that slopes downwards to the water. Notwithstanding the fact that here the lowering track 21, 22 has been constructed in essentially the same way as the non-driven sloping section 13 of the raising track, transport means can optionally also be provided in the lowering track 21, 22, so as to transport the net suspended underneath it more easily further along the lowering track 21, 22.

According to the invention the harvesting members 19 can be constructed in a wide variety of ways. For example, in this context consideration can be given to the harvesting members such as are known from the state of the art, for example from WO 01/93671. Advantageously, however, the harvesting members 19 are constructed as two rollers arranged on either side of the net 6 with coarse brush hairs provided over the entire periphery. The direction of rotation of the rollers for the purposes of harvesting is oriented such that the rollers 19 essentially work against feeding of the net 6 in the feed direction according to arrow 23.

In order to ensure that when feeding the net 6 between the harvesting members 19 it is tensioned in the transverse direction, that is to say transversely to the direction of arrow 23, i.e. in the vertical direction according to Fig. 1, two tensioning wheels 24, 25 are provided on either side of the net 6. Here, by way of example, each tensioning wheel is made up of two discs, an outer disc 26 with a larger diameter and an inner disc 27 with a smaller diameter. The inner disc 27 is in each case so arranged that the peripheral rim thereof bears on top of the bottom cable 7. The bottom cable 7 is thus pushed downwards from either side of the net 6 by, in each case, a disc 27 with a smaller diameter. With this arrangement the discs 26 with a larger diameter are located next to the bottom cable 7 to hold this in place, i.e. to prevent the latter from running off the smaller discs 27, which are actually acting as tensioning means. The tensioning discs 24, 25 are each mounted free running on bearings on individual shafts 28. This makes it possible to move the tensioning discs 24, 25 apart in the axial direction of the shaft 28 in order to facilitate feeding in the net at the start.

In order to ensure that when the net is fed between the harvesting members it is not only tensioned in the transverse direction but is also fed at the bottom and top at the same speed and equally paired, bottom transport means 30 are provided after the tensioning wheels 24, 25. In this example these bottom transport means 30 are constructed as a first row of four driven transport wheels 31 and a second row of three free-running or optionally also driven wheels 32. The wheels 31 and 32 have a concave surface of revolution such that the bottom cable 7 is guided between them. By providing the wheels 31 in the first row and the wheels 32 in the second row offset with respect to one another and also with a distance between them in each case, the parts of the surfaces of revolution of the wheels 31 and 32 facing one another can be interspersed, as a consequence of which the bottom cable 7 fed between them will follow a wavy path. This wavy path enables better grip on the bottom cable 7 and thus more reliable drive. The drive of the driven transport wheels 31 will, in particular, be so controlled that the bottom cable 7 is fed in the direction of arrow 23 at the same speed as the top cable 8. In other words, the speed of rotation of the driven wheels 31 will be-matched to the transport speed of the endless chains 16.

The bottom transport means are also able to counteract pulling the net skew as a consequence of raising it from the water at an angle.

Furthermore, practice shows that more mussels are caught at the top of the net than at the bottom, which leads to differences in resistance and tendency to pull skew. This difference in resistance can be compensated for by means of a drive both at the top of the net and at the bottom of the net. For this purpose the bottom drive and top drive will be controllable such that the net is fed past the harvesting members at the same speed at the bottom and at the top.

The mussels freed from the net by means of the harvesting members 19 will drop onto the deck of the pontoon 2 or optionally fall into a collection device and could then be transferred from said deck or from said collection device to a vessel moored alongside the pontoon 2.

## Claims

1. Method for harvesting shellfish that have been caught on a sheet-like substrate (6), such as a net,
wherein the substrate (6) has a longitudinal direction and a transverse direction transverse thereto;
wherein the substrate is fed in the longitudinal direction thereof between two harvesting members (19) arranged parallel to one another and moving with respect to the substrate, which harvesting members free the shellfish from the substrate on either side of the substrate;
wherein the shellfish that have been freed are collected;
**characterised in that**
the substrate (6) is tensioned in the transverse direction at the harvesting members (19), independently of the operation of the harvesting members.

2. Method according to Claim 1, wherein, viewed in the longitudinal direction, transport means (20) are provided after the harvesting members, by means of which transport means a tensile force acting on the substrate in the feed direction is exerted.

3. Method according to Claim 1 or 2, wherein the substrate (6) is provided at the bottom edge and top edge, which run in the longitudinal direction, with a bottom cable (7) and top cable (8), respectively, and wherein said tensioning of the substrate in the transverse direction is effected by exerting a transverse tensioning force in the transverse direction on the bottom cable and/or top cable.

4. Method according to Claim 3, wherein, viewed in the longitudinal direction, a tensile force acting in said feed direction is exerted after the harvesting members on both the bottom cable (7) and the top cable (8).

5. Method according to Claim 4, wherein said tensile forces are exerted on the bottom cable (7) and top cable (8) such that, viewed in the longitudinal direction, the bottom cable and top cable are advanced at approximately the same speed.

6. Method according to one of the preceding claims, wherein the substrate is brought above the water, preferably completely above the water, from a vertical position suspended in the water, by means of a raising track (13, 14) running upwards from the water level, by pulling up the substrate on said raising track in said longitudinal direction while the substrate (6) is suspended from said raising track and then feeding the substrate through said harvesting members (19) by means of a feed track adjoining the raising track, whilst the substrate is suspended from said feed track so as to harvest the shellfish above water.

7. Method according to Claim 6, wherein after the shellfish have been harvested therefrom the substrate (6) is returned to the water by means of a lowering track (21, 22) running downwards, whilst the substrate (6) is suspended from said lowering track.

8. Method according to Claim 6 or 7, wherein harvesting takes place on a vessel, or at least a floating body, the substrate (6) being pulled up out of the water against the direction of flow of the water.

9. Method according to Claim 8 in combination with Claim 7, wherein after harvesting the substrate (6) is returned to the water with the direction of flow of the water.

10. Installation (1) for harvesting shellfish that have been caught on a sheet-like substrate (6), such as a net,
wherein the substrate (6) has a longitudinal direction, a transverse direction transverse thereto, a bottom longitudinal edge and a top longitudinal edge;
wherein the installation comprises:
• harvesting members (19) extending in the transverse direction of the substrate (6), equipped to be able to feed the substrate, in the longitudinal direction thereof, between the harvesting members (12) and in so doing to free the shellfish from the substrate (6);
• an upper substrate guide, provided at the top of the harvesting members (19) and extending in the longitudinal direction of the substrate, from which the substrate, or at least the portion of the substrate to be treated by the harvesting members, can be suspended;
**characterised in that**
the installation furthermore comprises a bottom substrate guide, provided at the bottom of the harvesting members, and **in that** the top and/or bottom substrate guide have tensioning means (20) for tensioning, in the transverse direction, the portion of the substrate (6) to be fed between the harvesting members that is located between the harvesting members (19).

11. Installation according to Claim 10, wherein, viewed in the feed direction, transport means (20), equipped to exert a tensile force on the substrate to be fed between the harvesting members, are provided after the harvesting members.

12. Installation according to Claim 11, wherein the transport means (20) comprise upper transport means provided in the upper substrate guide, which upper transport means are equipped to engage on the substrate at the upper longitudinal edge.

13. Installation according to Claim 11 or 12, wherein the upper transport means comprise an endless conveyor (16).

14. Installation according to Claim 13, wherein the endless conveyor comprises two parallel endless chains (16) provided some distance apart, which endless chains are provided with teeth.

15. Installation according to Claim 14, furthermore comprising a substrate (6), wherein the substrate is provided with floats (9) along the top longitudinal edge, with engagement surfaces of a flexible, rubbery material provided at the bottom of the floats, and wherein the teeth on the endless chains are provided in such a way that they extend upwards from the top part of the endless chains so as to be able to engage with the engagement surfaces of the floats resting on the endless chains.

16. Installation according to Claim 15, wherein the floats (9) are attached to the top longitudinal edge (8) of the substrate (6) by means of elongated coupling members and wherein the distance between the endless chains is such that elongated coupling members can extend between these with clearance.

17. Installation according to one of Claims 11 - 16, wherein the transport means (20) comprise bottom drive means that are provided in the bottom substrate guide and are equipped to engage on the bottom longitudinal edge of the substrate (6).

18. Installation according to Claim 17, wherein the bottom drive means comprise a multiplicity of drive wheels (31, 32) that are equipped to engage, with the running surfaces thereof facing one another, on either side of the bottom longitudinal edge of the substrate.

19. Installation according to Claim 18, wherein the drive wheels comprise a row of first drive wheels (31), the axes of which are parallel to one another and in line, and a row of second drive wheels (32), the axes of which are in line with one another, wherein the row of first drive wheels (31) and the row of second drive wheels (32) run parallel to one another, and wherein the first drive wheels and second drive wheels are provided offset with respect to one another such that the first and second drive wheels can be located with the portions of the peripheral surfaces facing one another interspersed.

20. Installation according to Claim 19, wherein the distance between the row of first drive wheels (31) and the row of second drive wheels (32) is adjustable.

21. Installation according to one of Claims 10 - 20, wherein the tensioning means comprise two rotary tensioning wheels (24, 25) that are arranged alongside one another with their circular surfaces facing one another and are equipped to engage, when located on either side of the substrate (6) to be fed between them, with the peripheral surfaces on the top of the bottom longitudinal edge of said substrate in order to exert a downward force on said bottom longitudinal edge.

22. Installation according to Claim 21, wherein, viewed in the feed direction of the substrate, the tensioning wheels (24, 25) are provided after the harvesting members.

23. Installation according to one of Claims 17 - 22, further comprising a substrate with a bottom longitudinal edge comprising a cable (7).

24. Installation according to one of the preceding Claims 10-23, wherein the installation further comprises:
• a vessel (2), the harvesting members being provided on deck, and
• a raising track (13, 14) that runs upwards from the water level and on deck adjoins one end of the top substrate guide to guide substrate (6) suspended from the raising track into the top substrate guide.

25. Installation according to Claim 24, wherein the installation furthermore has a lowering track (21, 22) that adjoins the other end of the top substrate guide and runs down to the water in order to return the substrate from which the shellfish have been removed to the water.

26. Installation according to Claim 25, wherein the lowering track (21, 22) and raising track (13, 14), or at least the free ends thereof, run in the same horizontal direction, viewed in the horizontal plane.

## Patentansprüche

1. Verfahren zum Ernten von Schalentieren, welche auf einem blattartigen Substrat (6), wie einem Netz gefangen sind,
wobei das Substrat (6) eine Längsrichtung und eine Querrichtung quer dazu aufweist;
wobei das Substrat in der Längsrichtung davon zwischen zwei Erntegliedern (19) zugeführt wird, die parallel zueinander angeordnet sind und sich in bezug auf das Substrat bewegen, wobei die Ernteglieder die Schalentiere von dem Substrat auf jeder Seite des Substrats befreien;
wobei die befreiten Schalentiere gesammelt werden;
**dadurch gekennzeichnet, daß**
das Substrat (6) an den Erntegliedern (19) unabhängig von der Betätigung bzw. dem Betrieb der Ernteglieder in der Querrichtung gespannt wird.

2. Verfahren nach Anspruch 1, wobei, gesehen in der Längsrichtung, Transportmittel (20) nach den Erntegliedern vorgesehen sind, mittels welcher Transportmittel eine Zugkraft, die auf das Substrat in der Zufuhrrichtung wirkt, ausgeübt wird.

3. Verfahren nach Anspruch 1 oder 2, wobei das Substrat (6) an der Bodenkante und der Oberkante, welche in der Längsrichtung verlaufen, jeweils mit einem Bodenkabel (7) und einem oberen Kabel (8) versehen ist und wobei das Spannen des Substrats in der Querrichtung durch ein Ausüben einer querverlaufenden Zug- bzw. Spannkraft in der Querrichtung auf das Bodenkabel und/oder obere Kabel ausgeführt wird.

4. Verfahren nach Anspruch 3, wobei, gesehen in der Längsrichtung, eine Zugkraft, die in der Zufuhrrichtung wirkt, nach den Erntegliedern sowohl auf das Bodenkabel (7) als auch das obere Kabel (8) ausgeübt wird.

5. Verfahren nach Anspruch 4, wobei die Zugkräfte auf das Bodenkabel (7) und das obere Kabel (8) derart ausgeübt werden, daß, gesehen in der Längsrichtung, das Bodenkabel und das obere Kabel mit etwa derselben Geschwindigkeit vorbewegt werden.

6. Verfahren nach einem der vorhergehenden Ansprüche, wobei das Substrat über das Wasser, vorzugsweise vollständig über das Wasser, aus einer vertikalen in das Wasser abgehängten Position, mittels einer Hebebahn (13, 14) gebracht wird, die nach oben von dem Wasserniveau verläuft, indem das Substrat an der Hebebahn in der Längsrichtung hochgezogen wird, während das Substrat (6) von der Hebebahn abgehängt ist, und dann das Substrat durch die Ernteglieder (19) mittels einer Zufuhrbahn zugeführt wird, die sich an die Hebebahn anschließt, während das Substrat von der Zufuhrbahn abgehängt ist, um die Schalentiere über Wasser zu ernten.

7. Verfahren nach Anspruch 6, wobei, nachdem die Schalentiere davon geerntet wurden, das Substrat (6) mittels einer Absenkbahn (21, 22), die nach unten läuft, in das Wasser zurückgeführt wird, während das Substrat (6) von der Absenkbahn abgehängt ist.

8. Verfahren nach Anspruch 6 oder 7, wobei ein Ernten auf einem Schiff oder auf wenigstens einem Schwimmkörper stattfindet, wobei das Substrat (6) gegen die Richtung eines Wasserstroms aus dem Wasser gezogen wird.

9. Verfahren nach Anspruch 8 in Kombination mit Anspruch 7, wobei nach einem Ernten das Substrat (6) in der Richtung des Wasserstroms in das Wasser zurückgeführt wird.

10. Anlage (1) zum Ernten von Schalentieren, welche auf einem blattartigen Substrat (6), wie einem Netz gefangen wurden,
wobei das Substrat (6) eine Längsrichtung, eine Querrichtung quer zu dieser, eine Bodenlängskante und eine obere Längskante aufweist;
wobei die Anlage umfaßt:
• Ernteglieder (19), die sich in der Querrichtung des Substrats (6) erstrecken, die ausgestattet bzw. ausgerüstet sind, um fähig zu sein, das Substrat in der Längsrichtung davon zwischen den Erntegliedern (12) zuzuführen, und indem dies ausgeführt wird, die Schalentiere von dem Substrat (6) zu befreien;
• eine obere Substratführung, die an der Oberseite der Ernteglieder (19) vorgesehen ist und sich in der Längsrichtung des Substrats erstreckt, von welcher das Substrat oder wenigstens der Abschnitt des Substrats, das bzw. der durch die Ernteglieder zu behandeln ist, abgehängt werden kann;
**dadurch gekennzeichnet, daß**
die Anlage darüber hinaus eine Bodensubstratführung umfaßt, die an dem Boden der Ernteglieder vorgesehen ist, und daß die obere Substratführung und/oder Bodensubstratführung Spannmittel (20) zum Spannen des Abschnitts des Substrats (6) in der Querrichtung aufweist (aufweisen), um zwischen den Erntegliedern zugeführt zu werden, der zwischen den Erntegliedern (19) angeordnet ist.

11. Anlage nach Anspruch 10, wobei, gesehen in der Zufuhrrichtung, Transportmittel (20), die ausgestattet bzw. ausgerüstet sind, um eine Zugkraft auf das zwischen den Erntegliedern zuzuführende Substrat auszuüben, nach den Erntegliedern vorgesehen sind.

12. Anlage nach Anspruch 11, wobei die Transportmittel (20) obere Transportmittel umfassen, die in der oberen Substratführung zur Verfügung gestellt sind, wobei die oberen Transportmittel ausgestattet sind, um das Substrat an der oberen Längskante zu ergreifen.

13. Anlage nach Anspruch 11 oder 12, wobei die oberen Transportmittel einen Endlosförderer (16) umfassen.

14. Anlage nach Anspruch 13, wobei der Endlosförderer zwei parallele Endlosketten (16) umfaßt, die in einem gewissen Abstand vorgesehen sind, wobei die Endlosketten mit Zähnen versehen sind.

15. Anlage nach Anspruch 14, darüber hinaus umfassend ein Substrat (6), wobei das Substrat mit Schwimmern (9) entlang der Oberseitenlängskante versehen ist, wobei Eingriffsoberflächen aus einem flexiblen gummiartigen Material an dem Boden der Schwimmer vorgesehen sind, und wobei die Zähne auf den Endlosketten in einer derartigen Weise vorgesehen sind, daß sie sich nach oben von dem Oberteil der Endlosketten erstrecken, um fähig zu sein, mit den Eingriffsoberflächen der Schwimmer, die auf den Endlosketten aufruhen bzw. liegen, in Eingriff zu gelangen.

16. Anlage nach Anspruch 15, wobei die Schwimmer (9) an der Oberseitenlängskante (8) des Substrats (6) mittels länglicher Kopplungsglieder festgelegt sind und wobei der Abstand zwischen den Endlosketten derart ist, daß sich längliche Kopplungsglieder zwischen diesen mit einem Spiel erstrecken können.

17. Anlage nach einem der Ansprüche 11 - 16, wobei die Transportmittel (20) Bodenantriebsmittel umfassen, welche in der Bodensubstratführung vorgesehen sind, und ausgestattet bzw. ausgerüstet sind, um die Bodenlängskante des Substrats (6) zu ergreifen.

18. Anlage nach Anspruch 17, wobei die Bodenantriebsmittel eine Mehrzahl von Antriebsrädern (31, 32) umfassen, die ausgestattet sind, um auf jeder Seite der Bodenlängskante des Substrats einzugreifen, wobei die Laufoberflächen davon einander zugewandt sind.

19. Anlage nach Anspruch 18, wobei die Antriebsräder eine Reihe von ersten Antriebsrädern (31), deren Achsen parallel zueinander und in einer Linie sind, und eine Reihe von zweiten Antriebsrädern (32) umfassen, deren Achsen in einer Linie zueinander sind, wobei die Reihe von ersten Antriebsrädern (31) und die Reihe von zweiten Antriebsrädern (32) parallel zueinander laufen, und wobei die ersten Antriebsräder und die zweiten Antriebsräder versetzt in bezug zueinander vorgesehen sind, so daß die ersten und zweiten Antriebsräder angeordnet sein können, wobei die Abschnitte der zueinander gerichteten Umfangsoberflächen versetzt bzw. zwischengelagert sind.

20. Anlage nach Anspruch 19, wobei der Abstand zwischen der Reihe von ersten Antriebsrädern (31) und der Reihe von zweiten Antriebsrädern (32) einstellbar ist.

21. Anlage nach einem der Ansprüche 10 - 20, wobei die Spannmittel zwei drehbare Spannräder (24, 25) umfassen, die entlang voneinander mit ihren kreisförmigen Oberflächen zueinander schauend angeordnet sind und die ausgestattet sind, um, wenn sie auf einer bzw. jeder Seite des Substrats (6) angeordnet sind, das zwischen diesen zuzuführen ist, mit den Umfangsoberflächen auf der Oberseite der Bodenlängskante des Substrats in Eingriff zu gelangen, um eine nach unten gerichtete Kraft auf die Bodenlängskante auszuüben.

22. Anlage nach Anspruch 21, wobei, gesehen in der Zufuhrrichtung des Substrats, die Spannräder (24, 25) nach den Erntegliedern vorgesehen sind.

23. Anlage nach einem der Ansprüche 17 - 22, weiterhin umfassend ein Substrat mit einer Bodenlängskante, die ein Kabel (7) umfaßt.

24. Anlage nach einem der vorangehenden Ansprüche 10 - 23, wobei die Anlage weiterhin umfaßt:
• ein Schiff (2), wobei die Ernteglieder auf einem Deck vorgesehen sind, und
• eine Hebebahn (13, 14), welche nach oben von dem Wasserniveau läuft und auf Deck an ein Ende der oberen Substratführung angrenzt, um das Substrat (6), das von der Hebebahn abgehängt ist, in die obere Substratführung zu führen.

25. Anlage nach Anspruch 24, wobei die Anlage weiterhin eine Absenkbahn (21, 22) aufweist, welche an das andere Ende der oberen Substratführung angrenzt und nach unten zu dem Wasser läuft, um das Substrat, von welchem die Schalentiere entfernt wurden, zu dem Wasser zurückzuführen.

26. Anlage nach Anspruch 25, wobei die Absenkbahn (21, 22) und die Hebebahn (13, 14) oder wenigstens die freien Enden davon in derselben horizontalen Richtung, gesehen in der horizontalen Ebene, verlaufen.

## Revendications

1. Procédé pour récolter des crustacés et des mollusques qui ont été attrapés sur un substrat de type toile (6), tel qu'un filet,
dans lequel le substrat (6) a une direction longitudinale et une direction transversale perpendiculaire à celle-ci,
dans lequel le substrat est acheminé dans sa direction longitudinale entre deux éléments de récolte (19) agencés parallèles l'un à l'autre et se déplaçant par rapport au substrat, lesquels éléments de récolte libèrent les crustacés et les mollusques du substrat de chaque côté du substrat,
dans lequel les crustacés et les mollusques qui ont été libérés sont recueillis,
**caractérisé en ce que** le substrat (6) est mis en tension dans la direction transversale au niveau des éléments de récolte (19) indépendamment du fonctionnement des éléments de récolte.

2. Procédé selon la revendication 1, dans lequel, vus dans la direction longitudinale, des moyens de transport (20) sont agencés après les éléments de récolte, moyens de transport par l'intermédiaire desquels une force de traction agissant sur le substrat dans la direction d'acheminement est exercée.

3. Procédé selon la revendication 1 ou 2, dans lequel le substrat (6) est agencé sur le bord inférieur et sur le bord supérieur, lesquels s'étendent dans la direction longitudinale, avec un câble inférieur (7) et un câble supérieur (8), respectivement, et dans lequel ladite mise en tension du substrat dans la direction transversale est réalisée en exerçant une force de tension transverse dans la direction transversale sur le câble inférieur et/ou le câble supérieur.

4. Procédé selon la revendication 3, dans lequel, vu dans la direction longitudinale, une force de traction agissant dans ladite direction d'acheminement est exercée après les éléments de récolte à la fois sur le câble inférieur (7) et sur le câble supérieur (8).

5. Procédé selon la revendication 4, dans lequel lesdites forces de traction sont exercées sur le câble inférieur (7) et sur le câble supérieur (8) de telle sorte que, vu dans la direction longitudinale, le câble inférieur et le câble supérieur progressent approximativement à la même vitesse.

6. Procédé selon l'une des revendications précédentes, dans lequel le substrat est amené au-dessus de l'eau, de préférence totalement au-dessus de l'eau, depuis une position verticale suspendue dans l'eau, au moyen d'une piste ascendante (13, 14) s'étendant vers le haut depuis le niveau de l'eau, en tirant le substrat vers le haut sur ladite piste ascendante dans ladite direction longitudinale alors que le substrat (6) est suspendu à ladite piste de montée et en acheminant alors le substrat à travers lesdits éléments de récolte (19) au moyen d'une piste d'acheminement adjacente à la piste ascendante, tandis que le substrat est suspendu depuis ladite piste d'acheminement de manière à récolter les crustacés et les mollusques au-dessus de l'eau.

7. Procédé selon la revendication 6, dans lequel, après que les crustacés et les mollusques ont été récoltés à partir de celui-ci, le substrat (6) est renvoyé dans l'eau au moyen d'une piste descendante (21, 22) s'étendant vers le bas, tandis que le substrat (6) est suspendu à ladite piste de descente.

8. Procédé selon la revendication 6 ou 7, dans lequel une récolte a lieu sur un navire, ou au moins un corps flottant, le substrat (6) étant tiré en hors de l'eau contre la direction d'écoulement de l'eau.

9. Procédé selon la revendication 8 en combinaison avec la revendication 7, dans lequel après la récolte, le substrat (6) est renvoyé dans l'eau dans la direction d'écoulement de l'eau.

10. Installation (1) pour récolter des crustacés et des mollusques qui ont été attrapés sur un substrat de type toile (6) tel qu'un filet,
dans lequel le substrat (6) a une direction longitudinale, une direction transversale perpendiculaire à celle-ci, un bord longitudinal inférieur et un bord longitudinal supérieur,
dans laquelle l'installation comporte :
• des éléments de récolte (19) s'étendant dans la direction transversale du substrat (6), équipés pour pouvoir acheminer le substrat, dans sa direction longitudinale, entre les éléments de récolte (19) et ce faisant pour libérer les crustacés et les mollusques du substrat (6),
• un guide de substrat supérieur, agencé sur la partie supérieure des éléments de récolte (19) et s'étendant dans la direction longitudinale du substrat, auquel le substrat, ou au moins la partie du substrat à traiter par les éléments de récolte, peut être suspendu,
**caractérisée en ce que** l'installation comporte également un guide de substrat inférieur, agencé sur la partie inférieure des éléments de récolte, et **en ce que** le guide de substrat supérieur et/ou inférieur a des moyens de mise en tension (20) pour mettre en tension, dans la direction transversale, la partie du substrat (6) à acheminer entre les éléments de récolte qui est positionnée entre les éléments de récolte (19).

11. Installation selon la revendication 10, dans laquelle, vu dans la direction d'acheminement, les moyens de transport (20) équipés pour exercer une force de traction sur le substrat à acheminer entre les éléments de récolte, sont agencés après les éléments de récolte.

12. Installation selon la revendication 11, dans laquelle les moyens de transport (20) comportent des moyens de transport supérieurs agencés dans le guide de substrat supérieur, lesquels moyens de transport supérieurs sont équipés pour venir en contact sur le substrat au niveau du bord longitudinal supérieur.

13. Installation selon la revendication 11 ou 12, dans laquelle les moyens de transport supérieurs comportent un convoyeur sans fin (16).

14. Installation selon la revendication 13, dans laquelle le convoyeur sans fin comporte deux chaînes sans fin parallèles (16) agencées à une certaine distance l'une de l'autre, lesquelles chaînes sans fin sont munies de dents.

15. Installation selon la revendication 14, comportant également un substrat (6), dans laquelle le substrat est muni de flotteurs (9) le long du bord longitudinal supérieur, des surfaces de contact constituées d'un matériau caoutchouteux souple étant agencées sur la partie inférieure des flotteurs, et dans laquelle les dents sur les chaînes sans fin sont agencées de telle sorte qu'elles s'étendent vers le haut depuis la partie supérieure des chaînes sans fin de manière à pouvoir venir en prise avec les surfaces de contact des flotteurs en appui sur les chaînes sans fin.

16. Installation selon la revendication 15, dans laquelle les flotteurs (9) sont fixés sur le bord longitudinal supérieur (8) du substrat (6) au moyen d'éléments de couplage allongés et dans laquelle la distance entre les chaînes sans fin est telle que les éléments de couplage allongés peuvent s'étendre entre celles-ci avec un espace de dégagement.

17. Installation selon l'une des revendications 11 à 16, dans laquelle les moyens de transport (20) comportent des moyens d'entraînement inférieurs qui sont agencés dans le guide de substrat inférieur et qui sont équipés pour venir en prise sur le bord longitudinal inférieur du substrat (6).

18. Installation selon la revendication 17, dans laquelle les moyens d'entraînement inférieurs comportent une multiplicité de roues d'entraînement (31, 32) qui sont équipées pour venir en contact, leurs surfaces de roulement se faisant face les unes aux autres, de chaque côté du bord longitudinal inférieur du substrat.

19. Installation selon la revendication 18, dans laquelle les roues d'entraînement comportent une rangée de premières roues d'entraînement (31), dont les axes sont parallèles les uns aux autres et en ligne, et une rangée de secondes roues d'entraînement (32) dont les axes sont en ligne les uns avec les autres, dans laquelle la rangée de premières roues d'entraînement (31) et la rangée de secondes roues d'entraînement (32) s'étendent parallèlement l'une à l'autre, et dans laquelle les premières roues d'entraînement et les secondes roues d'entraînement sont agencées de façon décollée les unes par rapport aux autres de telle sorte que les premières et secondes roues d'entraînement peuvent être positionnées en ayant les parties des surfaces périphériques se faisant face les unes aux autres intercalées.

20. Installation selon la revendication 19, dans laquelle la distance entre la rangée de premières roues d'entraînement (31) et la rangée de secondes roues d'entraînement (32) est réglable.

21. Installation selon l'une des revendications 10 à 20, dans laquelle les moyens de mise en tension comportent deux roues rotatives de mise en tension (24, 25) qui sont agencées l'une à côté de l'autre avec leurs surfaces circulaires se faisant face et sont équipées pour venir en prise, lorsqu'elles sont positionnées de chaque côté du substrat (6) à acheminer entre celles-ci, avec les surfaces périphériques sur la partie supérieure du bord longitudinal inférieur dudit substrat afin d'exercer une force vers le bas sur ledit bord longitudinal inférieur.

22. Installation selon la revendication 21, dans laquelle, vues dans la direction d'acheminement du substrat, les roues de mise en tension (24, 25) sont agencées après les éléments de récolte.

23. Installation selon l'une des revendications 17 à 22, comportant également un substrat ayant un bord longitudinal inférieur comportant un câble (7).

24. Installation selon l'une des revendications précédentes 10 à 23, dans laquelle l'installation comporte également :
• un navire (2), les éléments de récolte étant agencés sur le pont, et
• une piste ascendante (13, 14) qui s'étend vers le haut depuis le niveau de l'eau et qui sur le pont est adjacente à une extrémité du guide de substrat supérieur pour guider le substrat (6) suspendu à la piste ascendante dans le guide de substrat supérieur.

25. Installation selon la revendication 24, dans laquelle l'installation a de plus une piste descendante (21, 22) qui est adjacente à l'autre extrémité du guide de substrat supérieur et s'étend vers le bas jusqu'à l'eau afin de renvoyer le substrat duquel les crustacés et les mollusques ont été retirés, dans l'eau.

26. Installation selon la revendication 25, dans laquelle la piste descendante (21, 22) et la piste ascendante (13, 14) ou au moins leurs extrémités libres, s'étendent dans la même direction horizontale, vue dans le plan horizontal.
